# EUROPEAN PATENT APPLICATION

(11) **EP 4 644 311 A1**
(43) Date of publication of application: **05.11.2025**
(21) Application number: 22969631.5
(22) Date of filing: 29.12.2022
(51) Int. Cl.: B66C 23/693

(54) **BOOM AND JIB CRANE PROVIDED WITH THE BOOM**

(30) Priority: 26.12.2022 CN 202211672012
(71) Applicant: Xuzhou Heavy Machinery Co., Ltd., Xuzhou, Jiangsu 221004 (CN)
(72) Inventor: MA, Shanhua, Xuzhou, Jiangsu 221004 (CN); ZHU, Wei, Xuzhou, Jiangsu 221004 (CN); ZHANG, Yanwei, Xuzhou, Jiangsu 221004 (CN); CHEN, Suxun, Xuzhou, Jiangsu 221004 (CN)
(74) Representative: Proi World Intellectual Property GmbH
(86) International application number: PCT/CN2022/143084
(87) International publication number: WO 2024/138480

(57) **Abstract**

Disclosed in the present invention is a boom, comprising a front end boom, the front end boom being provided with multiple groups of front boom sections, and adjacent front boom sections being connected by a telescopic oil cylinder; a rear end boom, the rear end boom being provided with multiple groups of rear boom sections, the front and rear boom sections as well as adjacent rear boom sections being both connected by a pulley structure; and a locking structure (A), which is provided at the tail part of the boom sleeve of a rear boom section at the tail end. The locking structure of the boom has a compact structure and occupies a small overall space, thus effectively increasing the cross-sectional size of the boom sleeve of a six-section boom, and improving the bearing capacity of the boom. Further disclosed in the present invention is a jib crane.

## Description

### TECHNICAL FIELD

The invention relates to a boom and a jib crane provided with the boom, and belongs to the technical field of cranes.

### BACKGROUND ART

At present, telescopic boom cranes typically adopt two types of telescopic booms: cylinder and rope type booms and single-cylinder and latch type booms. The cylinder and rope type booms are high in efficiency and low in failure rate and generally applied to small and medium-tonnage cranes with no more than five boom sections. Cranes with six or more boom sections generally adopt the single-cylinder and latch type booms. However, because the single-cylinder and latch type booms occupy a large space and have a complex structure, a high failure rate and other defects, they are only applied to medium and large-tonnage cranes at present. The prior art has the following defects: a cylinder latch mechanism and a boom latch mechanism are complex in structure and occupy a large space, a detection and control system is complex and is high in failure rate, and internal maintenance is inconvenient.

### BRIEF SUMMARY OF THE INVENTION

The objective of the invention is to provide a boom and a jib crane provided with the boom to overcome the defects that, in the prior art, a cylinder latch mechanism and a boom latch mechanism are complex in structure and occupy a large space, a detection and control system is complex and high in failure rate, and internal maintenance is inconvenient.

A boom comprises:
a front boom, wherein the front boom is provided with multiple front boom sections, and every two adjacent front boom sections are connected by means of a telescopic cylinder;
a rear boom, wherein the rear boom is provided with multiple rear boom sections, and the corresponding front and rear boom sections and every two adjacent rear boom sections are connected by means of a pulley structure; and
a lock mechanism, wherein the lock mechanism is arranged at a tail of a boom sleeve of a last rear boom section.

Further, the front boom sections at least comprise a basic boom section, a second boom section and a third boom section, the basic boom section and the second boom section are connected by means of a telescopic cylinder I, and the second boom section and the third boom section are connected by means of a telescopic cylinder II; the rear boom sections at least comprise a fourth boom section, a fifth boom section and a sixth boom section, and the third boom section and the fourth boom section and the fourth boom section, the fifth boom section and the sixth boom section are connected by means of the pulley structure.

Further, the pulley structure comprises:
multiple front boom section pulley assemblies, wherein one front boom section pulley assembly has an end connected to the second boom section as well as an end sliding around the telescopic cylinder II to be connected to the fourth boom section, and the other front boom section pulley assembly has an end connected to the fourth boom section as well as an end sliding around a tail of the third boom section to be connected to a cylinder barrel of the telescopic cylinder I; and
multiple rear boom section pulley assemblies, wherein the rear boom section pulley assemblies comprises a first rear boom section pulley assembly, a second rear boom section pulley assembly, a third rear boom section pulley assembly and a fourth rear boom section pulley assembly, the first rear boom section pulley assembly has an end connected to the third boom section as well as an end connected to the fifth boom section, the second rear boom section pulley assembly has an end connected to the fourth boom section as well as an end connected to the sixth boom section, the third rear boom section pulley assembly has an end connected to the fifth boom section as well as an end connected to a cylinder barrel of the telescopic cylinder II, and the fourth rear boom section pulley assembly has an end connected to the sixth boom section as well as an end sliding around the fifth boom section to be connected to the fourth boom section.

Further, the front boom section pulley assemblies comprise ropes and pulleys, the pulley I is fixedly arranged at an end of the cylinder barrel of the telescopic cylinder II, the pulley IV is fixed to the tail of the third boom section, the rope I has an end connected to the second boom section as well as an end wound around the pulley I to be connected to the fourth boom section, and the rope IV has an end connected to the fourth boom section as well as an end wound around the pulley IV to be connected to the cylinder barrel of the telescopic cylinder I.

Further, the rear boom section pulley assemblies comprise pulleys and ropes, the pulley II is fixed to a head of the fourth boom section, the pulley III is fixed to a head of the fifth boom section, the pulley V is fixed to a tail of the fourth boom section, the pulley VI is fixed to a tail of the fifth boom section, the rope II has an end connected to the third boom section as well as an end wound around the pulley II to be connected to the fifth boom section, the rope III has an end connected to the fourth boom section as well as an end wound around the pulley III to be connected to the sixth boom section, the rope V has an end connected to the fifth boom section as well as an end wound around the pulley V to be connected to the cylinder barrel of the telescopic cylinder II, and the rope VI has an end connected to the fourth boom section as well as an end wound around the pulley VI to be connected to the sixth boom section.

Further, lock mechanism maintenance holes are formed in tails of boom sleeves of the basic boom section, the second boom section, the third boom section and the fourth boom section, and a plurality of lock holes are formed in a boom sleeve of the fifth boom section.

Further, the lock mechanism comprises a lock block, mounts, a limiting pin, a spring and a stationary base, the lock block is connected to the mounts by means of spindles and compression springs, the mounts are fixedly arranged at a tail of a boom sleeve of a sixth boom section, and the stationary base is arranged on a back of the lock block by means of the limiting pin and the spring.

Further, the lock block is provided with a limiting hole matched with the corresponding rear boom section.

Further, the mounts fixedly connect the lock block and the sixth boom section by means of bolts.

Ajib crane comprises the boom described above.

Compared with the prior art, the invention fulfills the following beneficial effects:
1. The lock mechanism of the boom provided by the invention is compact in structure, occupies a small space, and effectively increases the sectional dimension of the boom sleeve of the sixth boom section, thus improving the load-carrying capacity of the boom;
2. When the boom provided by the invention is used for hoisting, the force borne by the sixth boom section is transmitted to the fifth boom section by the lock mechanism, and the rope III will not bear a force, such that the force borne by the rope II, the rope I and the telescopic cylinder II is reduced;
3. When a force is applied to the lock mechanism in the invention, the lock block will bear a force, and the spindles will not bear a force, such that the force distribution is reasonable;
4. When the boom provided by the invention is in a completely retracted state, the whole lock mechanism can be detached to be maintained by means of the maintenance holes in the boom sections, such that maintenance is easy.

### BRIEF DESCRIPTION OF THE SEVERAL VIEWS OF THE DRAWINGS

FIG. 1 is a schematic diagram of a boom according to the invention;
FIG. 2 is a structural diagram of the boom according to the invention;
FIG. 3 is a structural diagram of a lock mechanism according to the invention;
FIG. 4 is an installation diagram of the lock mechanism according to the invention;
FIG. 5 is an exploded view of the lock mechanism according to the invention;
FIG. 6 is a schematic diagram of the lock mechanism in a first state according to the invention;
FIG. 7 is a schematic diagram of the lock mechanism in a second state according to the invention;
FIG. 8 is a schematic diagram of the spatial size of the lock mechanism according to the invention;

In the FIGS.: 1, basic boom section; 2, second boom section; 3, third boom section; 4, fourth boom section; 5, fifth boom section; 6, sixth boom section; 7, telescopic cylinder I; 8, telescopic cylinder II; 9, rope I; 10, rope II; 11, rope III; 12, rope IV: 13, rope V; 14, rope VI; 15, lock mechanism; 16, pulley I; 17, pulley II: 18, pulley III; 19, pulley IV; 20, pulley V; 21, pulley VI; 31, lock block; 32, mount; 33, spindle; 34, compression spring; 35, bolt; 36, limiting pin; 37, spring; 38, stationary base; 39, limiting hole.

### DETAILED DESCRIPTION OF THE INVENTION

To gain a better understanding of the technical means, creative features, purposes and effects of the invention, the invention is further expounded below in conjunction with specific embodiments.

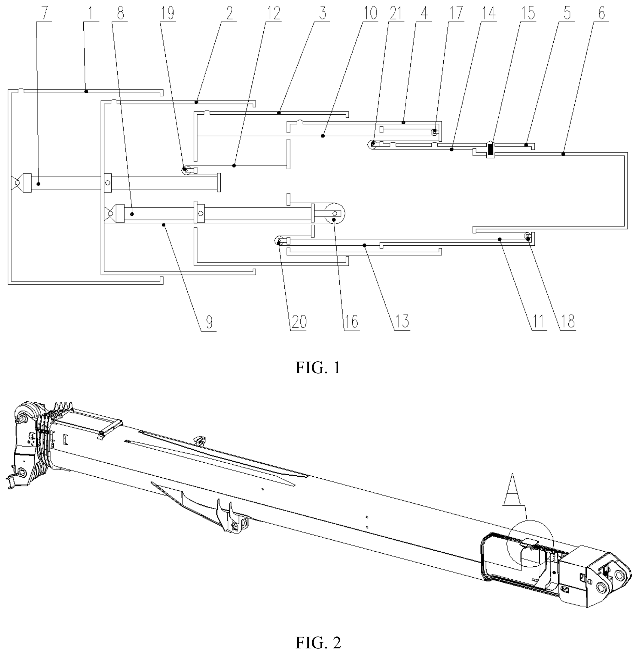

As shown in FIG. 1, the invention discloses a boom, comprising:
a front boom, wherein the front boom is provided with multiple front boom sections, and every two adjacent front boom sections are connected by means of a telescopic cylinder;
a rear boom, wherein the rear boom is provided with multiple rear boom sections, and the corresponding front and rear boom sections and every two adjacent rear boom sections are connected by means of a pulley structure; and
a lock mechanism A, wherein the lock mechanism is arranged at a tail of a boom sleeve of the last rear boom section.

Specifically, the front boom sections at least comprise a basic boom section 1, a second boom section 2 and a third boom section 3, wherein the basic boom section 1 and the second boom section 2 are connected by means of a telescopic cylinder I 7, and the second boom section 2 and the third boom section 3 are connected by means of a telescopic cylinder II 8; the rear boom sections at least comprise a fourth boom section 4, a fifth boom section 5 and a sixth boom section 6, wherein the third boom section 3 and the third boom section 4 and the four boom section 4, the fifth boom section 5 and the sixth boom section 6 are connected by means of the pulley structure.

In this embodiment, the pulley structure comprises:
multiple front boom section pulley assemblies, wherein one front boom section pulley assembly has an end connected to the second boom section 2 as well as an end sliding around the telescopic cylinder II 8 to be connected to the fourth boom section 4, and the other front boom section pulley assembly has an end connected to the fourth boom section 4 as well as an end sliding around a tail of the third boom section 3 to be connected to a cylinder barrel of the telescopic cylinder I 7; and
multiple rear boom section pulley assemblies, wherein the rear boom section pulley assemblies comprise a first rear boom section pulley assembly, a second rear boom section pulley assembly, a third rear boom section pulley assembly and a fourth rear boom section pulley assembly, the first rear boom section pulley assembly has an end connected to the third boom section as well as an end connected to the fifth boom section, the second rear boom section pulley assembly has an end connected to the fourth boom section 4 as well as an end connected to the sixth boom section, the third rear boom section pulley assembly has an end connected to the fifth boom section 5 as well as an end connected to a cylinder barrel of the telescopic cylinder II 8, and the fourth rear boom section pulley assembly has an end connected to the sixth boom section 4 as well as an end sliding around the fifth boom section to be connected to the fourth boom section.

In this embodiment, the front boom section pulley assemblies and the rear boom section pulley assemblies are described in detail. The front boom section assemblies comprise ropes 9 and 12 and pulleys 16 and 19, wherein the pulley I 16 is fixedly arranged at an end of the cylinder barrel of the telescopic cylinder II 8, the pulley IV 19 is fixed to the tail of the third boom section 3, the rope I 9 has an end connected to the second boom section 2 as well as an end wound around the pulley I 16 to be connected to the fourth boom section 2, and the rope IV 12 has an end connected to the fourth boom section 4 as well as an end wound around the pulley IV 19 to be connected to the cylinder barrel of the telescopic cylinder I 7.

In this embodiment, the rear boom section pulley assemblies are described in detail. The rear boom section pulley assemblies comprise pulleys 17, 18, 20 and 21 and ropes 10, 11, 13 and 14, wherein the pulley II 17 is fixed to a head of the fourth boom section 4, the pulley III 18 is fixed to a head of the fifth boom section 5, the pulley V 20 is fixed to a tail of the fourth boom section 4, the pulley VI 21 is fixed to a tail of the fifth boom section 5, the rope II 10 has an end connected to the third boom section 3 as well as an end wound around the pulley II 17 to be connected to the fifth boom section 5, the rope III 11 has an end connected to the fourth boom section 4 as well as an end wound around the pulley III 18 to be connected to the sixth boom section 6, the rope V 13 has an end connected to the fifth boom section 5 as well as an end wound around the pulley V 20 to be connected to the cylinder barrel of the telescopic cylinder II 8, and the rope VI 14 has an end connected to the fourth boom section 4 as well as an end wound around the pulley VI 21 to be connected to the sixth boom section 6.

The operating principle of the front boom section pulley assemblies and the rear boom section pulley assemblies is introduced below.

The telescopic cylinder I 7 controls the second boom section 2 to extend or retract; when the telescopic cylinder II 8 extends, the cylinder barrel of the telescopic cylinder II 8 drives the third boom section 3 to extend; at the same time, the fourth boom section 4 is driven to extend under the action of the pulley I 16 and the rope I 9; the fifth boom section 5 is driven to extend under the action of the pulley II 17 and the rope II; the sixth boom section 6 is driven to extend under the action of the pulley III 18 and the rope III 11, such that synchronous extension of the third boom section 3, the fourth boom section 4, the fifth boom section 5 and the sixth boom section 6 is realized.

When the telescopic cylinder II retracts, the cylinder barrel of the telescopic cylinder II drives the third boom section 3 to retract; at the same time, the fourth boom section 4 is driven to retract under the action of the pulley IV 19 and the rope IV 12; the fifth boom section 5 is driven to retract under the action of the pulley V 20 and the rope V 13; the sixth boom section 6 is driven to retract under the action of the pulley VI 21 and the rope VI 14, such that synchronous retraction of the third boom section 3, the fourth boom section 4, the fifth boom section 5 and the sixth boom section 6 is realized.

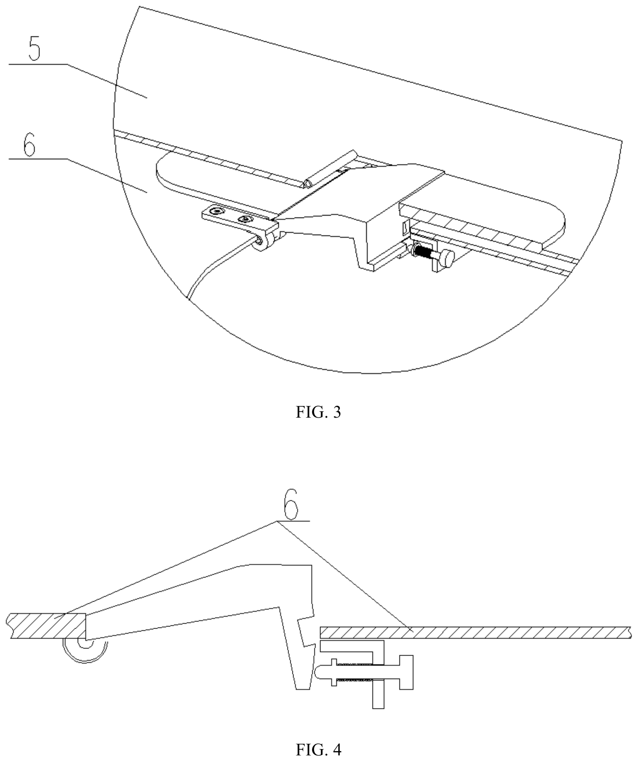

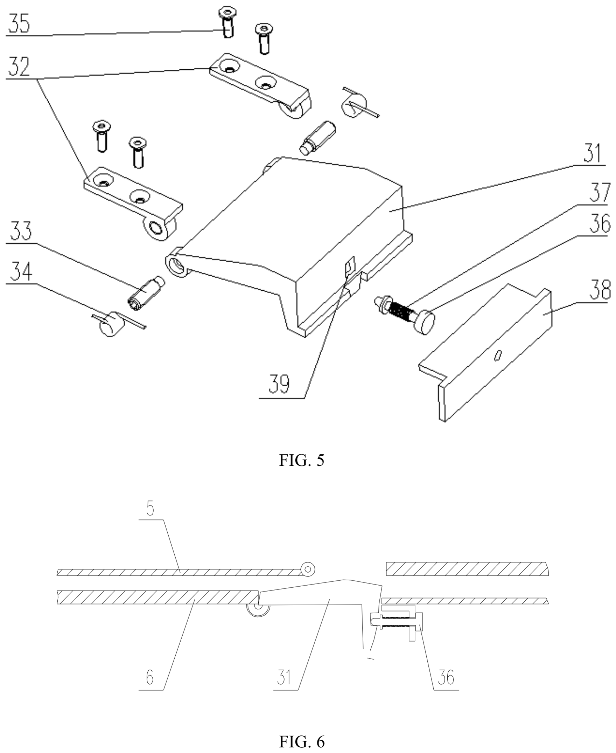

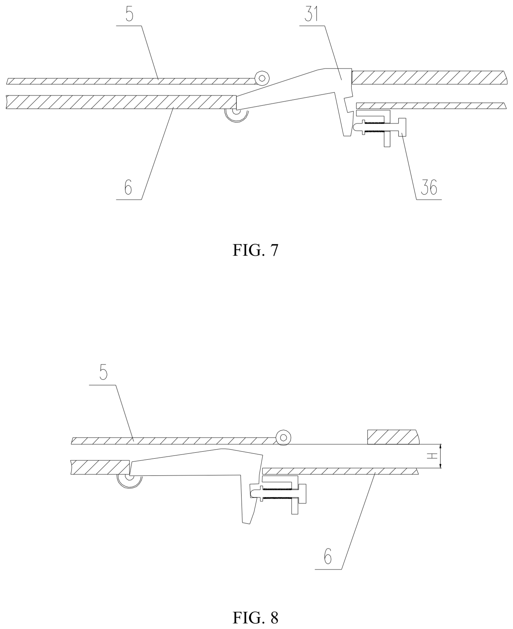

As shown in FIGS. 2-8, in this embodiment, the lock mechanism A is described in detail. The lock mechanism comprises a lock block 31, mounts 32, a limiting pin 36, a spring 37 and a stationary base 38, wherein the lock block 31 is connected to the mounts 32 by means of spindles 31 and compression springs 34, and the mounts 32 are fixedly arranged at a tail of a boom sleeve of the sixth boom section 6; the stationary base 38 is arranged on the back of the lock block 31 by means of the limiting pin 36 and the spring 37, and a limiting hole 39 matched with the corresponding rear boom section is formed in the lock block 31; the mounts 32 fixedly connect the lock block 31 and the sixth boom section 6 by means of bolts 35. As shown in FIG. 8, the lock mechanism of the boom provided by the invention is compact in structure, occupies a small space, has a small size H, and can effectively increase the sectional dimension of the boom sleeve of the sixth boom section, thus improving the load-carrying capacity of the boom.

The lock mechanism of the telescopic boom provided by the invention is applied between the last boom section and the second last boom section, and locking and unlocking between the two boom sections respectively correspond to a closed state and an open state of the lock mechanism. The compression springs provide a thrust to push the lock block to be closed. In the closed state, the lock block abuts against the second last boom section, and the last boom section is locked in a retracted state. When the last boom section retracts, the last boom section needs to extend by a set length first, at this moment, the second last boom section presses the lock block, and the lock block turns around the spindles; when the lock block turns to a set position, the limiting pin stretches out to keep the lock block in an open state, and at this moment, the last boom section can continuously retract partially or completely. To realize locking at the set position, the limiting pin retracts when the lock block reaches the set position, and the lock block returns from the open state to the closed state under the action of the compression springs and abuts against the second last boom section again to realize locking. The limiting pin may be driven by an electromagnetic valve or the like.

Lock mechanism maintenance holes are formed in tails of boom sleeves of the basic boom section 1, the second boom section 2, the third boom section 3 and the fourth boom section 4, and a plurality of lock holes are formed in a boom sleeve of the fifth boom section 5.

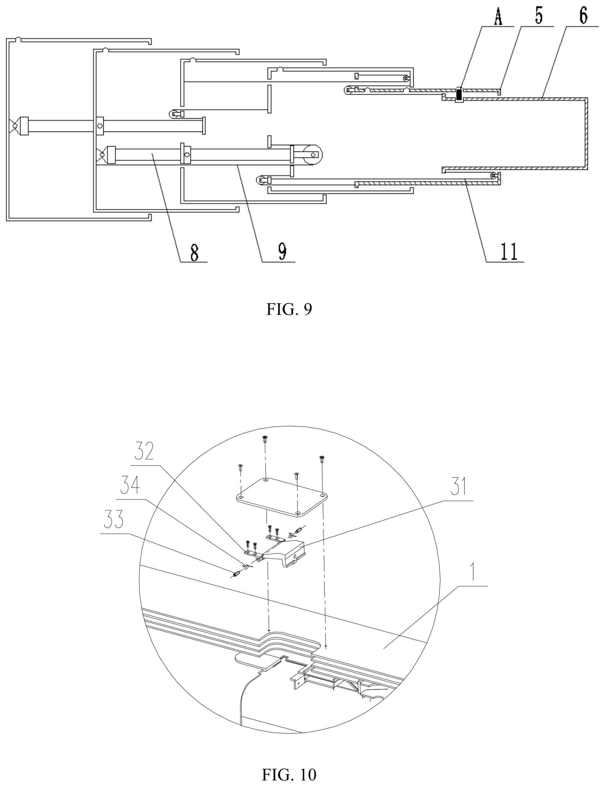

The lock mechanism is specifically used as follows: before the sixth boom 6 extends or retracts, the limiting pin 36 is inserted into the limiting hole of the lock block to separate the sixth boom section 6 from the fifth boom section 6. When the lock block on the sixth boom section 6 stretches into the corresponding lock hole in the fifth boom section, the limiting pin is separated from the lock block, the lock block is ejected from the lock hole, as shown in FIG. 9, and the sixth boom section 6 and the fifth boom section 5 are locked again, such that extension or retraction of the sixth boom section 6 is completed.

### Embodiment 2:

Ajib crane comprises the boom described above.

The above embodiments are merely preferred ones of the invention. It should be noted that those ordinarily skilled in the art can make some improvements and transformations without departing from the technical principle of the invention, and all these improvements and transformations should also fall within the protection scope of the invention.

## Claims

1. A boom, comprising:
a front boom, wherein the front boom is provided with multiple front boom sections, and every two adjacent said front boom sections are connected by means of a telescopic cylinder;
a rear boom, wherein the rear boom is provided with multiple rear boom sections, and the corresponding front and rear boom sections and every two adjacent said rear boom sections are connected by means of a pulley structure; and
a lock mechanism (A), wherein the lock mechanism is arranged at a tail of a boom sleeve of a last rear boom section.

2. The boom according to Claim 1, wherein the front boom sections at least comprise a basic boom section (1), a second boom section (2) and a third boom section (3), the basic boom section (1) and the second boom section (2) are connected by means of a telescopic cylinder I (7), and the second boom section (2) and the third boom section (3) are connected by means of a telescopic cylinder II (8); the rear boom sections at least comprise a fourth boom section (4), a fifth boom section (5) and a sixth boom section (6), and the third boom section (3) and the fourth boom section (4) and the fourth boom section (4), the fifth boom section (5) and the sixth boom section (6) are connected by means of the pulley structure.

3. The boom according to Claim 2, wherein the pulley structure comprises:
multiple front boom section pulley assemblies, wherein one said front boom section pulley assembly has an end connected to the second boom section (2) as well as an end sliding around the telescopic cylinder II (8) to be connected to the fourth boom section (4), and the other front boom section pulley assembly has an end connected to the fourth boom section (4) as well as an end sliding around a tail of the third boom section (3) to be connected to a cylinder barrel of the telescopic cylinder I (7); and
multiple rear boom section pulley assemblies, wherein the rear boom section pulley assemblies comprises a first rear boom section pulley assembly, a second rear boom section pulley assembly, a third rear boom section pulley assembly and a fourth rear boom section pulley assembly, the first rear boom section pulley assembly has an end connected to the third boom section as well as an end connected to the fifth boom section, the second rear boom section pulley assembly has an end connected to the fourth boom section (4) as well as an end connected to the sixth boom section, the third rear boom section pulley assembly has an end connected to the fifth boom section (5) as well as an end connected to a cylinder barrel of the telescopic cylinder II (8), and the fourth rear boom section pulley assembly has an end connected to the sixth boom section (4) as well as an end sliding around the fifth boom section to be connected to the fourth boom section.

4. The boom according to Claim 3, wherein the front boom section pulley assemblies comprise ropes (9 and 12) and pulleys (16 and 19), the pulley I (16) is fixedly arranged at an end of the cylinder barrel of the telescopic cylinder II (8), the pulley IV (19) is fixed to the tail of the third boom section (3), the rope I (9) has an end connected to the second boom section (2) as well as an end wound around the pulley I (16) to be connected to the fourth boom section (2), and the rope IV (12) has an end connected to the fourth boom section (4) as well as an end wound around the pulley IV (19) to be connected to the cylinder barrel of the telescopic cylinder I (7).

5. The boom according to Claim 3, wherein the rear boom section pulley assemblies comprise pulleys (17, 18, 20 and 21) and ropes (10, 11, 13 and 14), the pulley II (17) is fixed to a head of the fourth boom section (4), the pulley III (18) is fixed to a head of the fifth boom section (5), the pulley V (20) is fixed to a tail of the fourth boom section (4), the pulley VI (21) is fixed to a tail of the fifth boom section (5), the rope II (10) has an end connected to the third boom section (3) as well as an end wound around the pulley II (17) to be connected to the fifth boom section (5), the rope III (11) has an end connected to the fourth boom section (4) as well as an end wound around the pulley III (18) to be connected to the sixth boom section (6), the rope V (13) has an end connected to the fifth boom section (5) as well as an end wound around the pulley V (20) to be connected to the cylinder barrel of the telescopic cylinder II (8), and the rope VI (14) has an end connected to the fourth boom section (4) as well as an end wound around the pulley VI (21) to be connected to the sixth boom section (6).

6. The boom according to Claim 3, wherein lock mechanism maintenance holes are formed in tails of boom sleeves of the basic boom section (1), the second boom section (2), the third boom section (3) and the fourth boom section (4), and a plurality of lock holes are formed in a boom sleeve of the fifth boom section (5).

7. The boom according to Claim 1, wherein the lock mechanism (A) comprises a lock block (31), mounts (32), a limiting pin (36), a spring (37) and a stationary base (38), the lock block (31) is connected to the mounts (32) by means of spindles (33) and compression springs (34), the mounts (32) are fixedly arranged at a tail of a boom sleeve of a sixth boom section (6), and the stationary base (38) is arranged on a back of the lock block (31) by means of the limiting pin (36) and the spring (37).

8. The boom according to Claim 7, wherein the lock block (31) is provided with a limiting hole (39) matched with the corresponding rear boom section.

9. The boom according to Claim 7, wherein the mounts (32) fixedly connect the lock block (31) and the sixth boom section (6) by means of bolts (35).

10. A jib crane, comprising the boom according to any one of Claims 1-8.
